# EUROPÄISCHE PATENTSCHRIFT

(11) **EP 3 969 317 B1**
(45) Veröffentlichungstag und Bekanntmachung des Hinweises auf die Patenterteilung: **11.11.2026**
(21) Anmeldenummer: 20713850.4
(22) Anmeldetag: 12.03.2020
(51) Int. Cl.: B60K 35/00, B60K 35/10, B60K 35/22, B60K 35/53

(54) **ANZEIGEVORRICHTUNG UND KRAFTFAHRZEUG MIT EINER ANZEIGEVORRICHTUNG**
DISPLAY DEVICE AND MOTOR VEHICLE WITH A DISPLAY DEVICE
DISPOSITIF D'AFFICHAGE ET VÉHICULE AUTOMOBILE ÉQUIPÉ D'UN DISPOSITIF D'AFFICHAGE

(30) Priorität: 14.05.2019 DE 102019206935
(43) Veröffentlichungstag der Anmeldung: 23.03.2022
(73) Patentinhaber: Audi AG, 85045 Ingolstadt (DE)
(72) Erfinder: WALL, Christian, 85122 Hitzhofen (DE)
(74) Vertreter: Hofstetter, Schurack & Partner
(86) Internationale Anmeldenummer: PCT/EP2020/056673
(87) Internationale Veröffentlichungsnummer: WO 2020/229022

(56) Entgegenhaltungen:
- DE-A1- 10 115 050
- DE-B3- 102016 224 500
- US-A1- 2012 268 665

## Beschreibung

Die Erfindung betrifft eine Anzeigevorrichtung zum Anzeigen pixelbasierter Anzeigeinhalte, umfassend eine flexible Bildschirmeinrichtung sowie zumindest einen Schwenkmechanismus. Der jeweilige Schwenkmechanismus ist dazu ausgebildet, die Bildschirmeinrichtung in Abhängigkeit von einem Steuersignal zwischen einer Verstauposition, in welcher die Bildschirmeinrichtung entlang eines Kreisbogens gebogen in einem Gehäuse verstaut ist, und einer Gebrauchsposition, in welcher die Bildschirmeinrichtung zumindest teilweise aus dem Gehäuse herausragt, zu bewegen.

Unter einer flexiblen Bildschirmeinrichtung im Sinne der Erfindung ist eine biegsame Bildschirmeinrichtung zu verstehen. Mit anderen Worten kann die Bildschirmeinrichtung als Ganzes gebogen werden. Eine biegsame Anzeigefläche oder Anzeigeschicht einer solchen Bildschirmeinrichtung kann beispielsweise durch eine Folie und/oder Folienschichtanordnung realisiert und deshalb biegsam sein. Eine biegsame Trägerschicht für eine solche Bildschirmeinrichtung kann eine strukturelle und/oder materielle oder stoffliche Biegsamkeit aufweisen. Pixelbasierte Anzeigeinhalte sind aus einzelnen Bildpunkten aufgebaute Anzeigeinhalte, die beispielsweise auf einer OLEDbasierten (OLED - organic light emitting diode) oder TOLED-basierten (transparent OLED) Anzeigefläche angezeigt werden können.

Anzeigevorrichtungen mit flexiblen Bildschirmeinrichtungen sind grundsätzlich bekannt. Auch die Anordnung eines jeweiligen flexiblen Bildschirms in einer Verstau- und einer Gebrauchsposition ist dem bekannten Stand der Technik zu entnehmen.

So zeigt beispielsweise die EP 1 637 387 A1 eine Anzeigevorrichtung für ein Fahrzeug, umfassend ein flexibles Display. Die Anzeigevorrichtung weist darüber hinaus ein Gehäuse und einen als Scherengitter ausgebildeten Stabilisierungsmechanismus für das Display auf. Nachteilig hierbei ist, dass die Elemente des Scherengitters in einer Verstauposition zwangsläufig über den Rand des Displays hinausragen müssen, was zu einem erhöhten Bauraumbedarf führt.

Die DE 101 15 050 A1 beschreibt eine Anzeigevorrichtung, insbesondere für Fahrzeuge. Die beschriebene Anzeigevorrichtung weist einen flachen Bildschirm auf, der aus flexiblem Material besteht. Der Bildschirm wird bei einer Bewegung in eine Betrachtungsposition gekrümmt über eine Rolle transportiert. In einer freistehenden Betrachtungsposition ist es vorgesehen, dass der Bildschirm eine vorgegebene Form einnimmt, ohne dass die Flexibilität des Bildschirms eingeschränkt ist. Nachteilig an der Führung über eine Rolle ist es, dass bei der Konstruktion eines neuen Modells mit anderen Abmessungen ein jeweiliger Krümmungsradius des Bildschirms nur unter hohem konstruktiven Aufwand variiert werden kann, da alle mit der Rolle in Verbindung stehenden Teile neu dimensioniert werden müssen. Darüber hinaus führt der Transport über eine Rolle zwangsläufig zu einem erhöhten Verschleiß der Bildschirmrückseite.

Auch die DE 10 2014 016 323 A1 beschreibt eine Anzeigevorrichtung für einen Kraftwagen mit einer flexiblen Anzeigeeinrichtung und einer Verstelleinrichtung. Auch hier ist die Anzeigeeinrichtung dazu ausgebildet, von einer Verstauposition in eine Gebrauchsposition bewegt zu werden. Hierbei wird sie gebogen, so dass eine Anzeigefläche der Anzeigevorrichtung in der Gebrauchsposition gebogen ist. Die gebogene Anzeigefläche birgt den Nachteil, dass jeweilige Anzeigeinhalte im Zweifel verzerrt dargestellt werden und die Anzeigefläche nicht von allen Fahrzeuginsassen gut einsehbar ist.

Der Erfindung liegt die Aufgabe zugrunde, eine Anzeigevorrichtung bereitzustellen, die es ermöglicht, unterschiedlich große Anzeigeflächengrößen einzustellen, wobei die Anzeigevorrichtung einen geringen Bauraumbedarf aufweisen soll sowie ohne großen konstruktiven Aufwand an wechselnde Bauraumbedingungen angepasst werden können soll.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist eine Anzeigevorrichtung zum Anzeigen pixelbasierter Anzeigeinhalte bereitgestellt. Die Vorrichtung umfasst eine flexible Bildschirmeinrichtung sowie zumindest einen Schwenkmechanismus. Der zumindest eine Schwenkmechanismus ist dazu ausgebildet, die Bildschirmeinrichtung in Abhängigkeit von einem Steuersignal zwischen einer Verstauposition und einer Gebrauchsposition zu bewegen. Erfindungsgemäß ist es vorgesehen, dass die Bildschirmeinrichtung in der Verstauposition entlang eines Kreisbogens gebogen in einem Gehäuse verstaut ist. In der Gebrauchsposition ragt die Bildschirmeinrichtung zumindest teilweise aus dem Gehäuse heraus. Mit anderen Worten ist die Bildschirmeinrichtung in der Verstauposition von außen nicht sichtbar im Gehäuse verstaut und in der Gebrauchsposition ist zumindest ein Teilbereich der Bildschirmeinrichtung sichtbar, weil er aus dem Gehäuse herausragt. In der Verstauposition weist die Bildschirmeinrichtung also eine Krümmung auf. Die Krümmung kann dabei einer äußeren Form des Gehäuses folgen, welche konstant oder uneinheitlich sein kann. Es kann vorgesehen sein, dass die Bildschirmeinrichtung einen, zwei oder allgemein mehrere Schwenkmechanismen aufweist. Die Verwendung mehrerer Schwenkmechanismen ist dazu geeignet, eine Bewegung einer großen und/oder schweren Bildschirmeinrichtung zu ermöglichen.

Die Erfindung ist dadurch gekennzeichnet, dass der zumindest eine Schwenkmechanismus jeweils einen Motor und einen Schwenkarm aufweist. Ein Motor kann beispielsweise ein Elektromotor sein, der mit einer externen Energieversorgung verbunden ist. Der Schwenkarm ist mit einem Endbereich, also mit einem endständigen Bereich, drehbar an einem Fußbereich der Bildschirmeinrichtung und mit einem gegenüberliegenden Endbereich um eine Drehachse schwenkbar gelagert. Der Schwenkarm kann hierzu länglich oder stabförmig ausgebildet sein und zwei Endbereiche aufweisen, die einander gegenüberliegen. Die zwei Endbereiche können die zwei Enden des Schwenkarms sein. Ein Ende des Schwenkarms ist also an einem Fußbereich der Bildschirmeinrichtung drehbar angeordnet. Mit anderen Worten ist ein Ende des Schwenkarms in einem solchen Bereich der Bildschirmeinrichtung angeordnet, welcher in der Gebrauchsposition, in welcher die Bildschirmeinrichtung wie beschrieben zumindest teilweise aus dem Gehäuse herausragt, dem Gehäuse am nächsten liegt oder noch in dem Gehäuse verbleibt. Die drehbare Lagerung ermöglicht ein Abrollen oder Verdrehen des Schwenkarmendes an dem Fußbereich der Bildschirmeinrichtung. Mit dem gegenüberliegenden Ende ist der Schwenkarm um eine Drehachse drehbar gelagert, zum Beispiel am Motor oder an einem Getriebe, das den Schwenkarm mit dem Motor koppelt. Die Lagerung kann also direkt, beispielsweise an einer Welle des Motors, oder indirekt, beispielsweise über eine Zahnradanordnung eines Getriebes, realisiert sein.

Der Schwenkarm ist dazu ausgebildet, von dem Motor ein jeweiliges Drehmoment zu empfangen und hierdurch den Fußbereich entlang des Kreisbogens, dessen Radius entsprechend einer Länge des Schwenkarms entspricht, zu bewegen und hierdurch die Bildschirmeinrichtung abwechselnd (also je nach Schwenkrichtung des Schwenkarms) entlang einer Verschieberichtung in die Gebrauchsposition zu schieben (ausfahren) und in die Verstauposition zu ziehen (einfahren). Mit anderen Worten wird ein Drehmoment des Motors auf den Schwenkarm übertragen, wodurch dieser eine Schwenkbewegung ausführt. Das Drehmoment des Motors wird dadurch auf den Fußbereich der Bildschirmeinrichtung als Schubkraft oder Zugkraft übertragen. Durch diese Drehmomentübertragung oder gerichtete Kraftübertragung vom Motor auf den Fußbereich der Bildschirmeinrichtung wird diese abwechselnd aus dem Gehäuse heraus in die Gebrauchsposition geschoben und in das Gehäuse hinein in die Verstauposition gezogen. Der Drehsinn des Drehmoments des Motors wechselt hierzu zwischen zwei entgegengesetzten Richtungen.

Durch den vorgesehenen Schwenkmechanismus mit Motor und Schwenkarm ergibt sich der Vorteil, dass durch das Auswechseln eines einzigen Bauteils, nämlich des Schwenkarms, auf unterschiedliche Bauraumsituationen reagiert werden kann. Die Länge des Schwenkarms legt unmittelbar den Radius des Kreisbogens für die Verstauposition fest. Außerdem ergibt sich durch den vorgesehenen Schwenkmechanismus der Vorteil, dass die Bildschirmeinrichtung nur punktuell mit dem Schwenkarm verbunden werden muss. Es erfolgt keine vollflächige Beanspruchung der Rückseite der Bildschirmeinrichtung, wie dies beispielsweise bei einer Führung über eine Rolle erfolgen würde. Durch die Erfindung ergibt sich darüber hinaus der Vorteil, dass die Bildschirmeinrichtung entlang des Kreisbogens gebogen und somit platzsparend verstaut werden kann.

Zu der Erfindung gehören auch Ausführungsformen, durch die sich zusätzliche Vorteile ergeben.

Wie bereits ausgeführt, ist es vorgesehen, dass die Anzeigevorrichtung ein Gehäuse aufweist. Der zumindest eine Schwenkmechanismus ist gemäß einer vorteilhaften Ausführungsform im Inneren des Gehäuses angeordnet und dazu ausgelegt, die Bildschirmeinrichtung von der Verstauposition stufenlos in Abhängigkeit von dem Steuersignal in zumindest eine Zwischenposition zu schieben und dort zu halten. Mit anderen Worten ist es vorgesehen, dass die Bildschirmeinrichtung beliebig viele oder eine vorbestimmte Stufenanzahl an Positionen zwischen Verstauposition und endgradig oder vollständig ausgefahrener Gebrauchsposition einnehmen und halten kann. Es gibt somit mehrere Ausfahrstufen oder Ausfahrpositionen, also zwei oder mehr als zwei. Hierdurch ergibt sich der Vorteil, dass bedarfsgerecht eine bestimmte Bildschirmgröße hergestellt oder eingestellt werden kann. Das Gehäuse kann den zumindest einen Schwenkmechanismus und die Bildschirmeinrichtung ganz oder teilweise umschließen. Das Gehäuse weist bevorzugt einen Schlitz auf, durch welchen die Bildschirmeinrichtung von der Verstauposition in die Gebrauchsposition oder eine Zwischenposition geschoben und in umgekehrter Richtung in die Verstauposition zurück gezogen wird.

Gemäß einer vorteilhaften Weiterbildung weist die Bildschirmeinrichtung eine Trägerschicht und eine Anzeigeschicht auf, die miteinander zu einem flexiblen Schichtenverbund verbunden sind. Bevorzugt ist die Trägerschicht an ihrer Rückseite mit Einkerbungen versehen. Mit anderen Worten weist die Trägerschicht bevorzugt an einer der Anzeigeschicht abgewandten Fläche Einkerbungen auf. Gemäß der beschriebenen Weiterbildung ist die Trägerschicht dazu ausgebildet, gekrümmt zu werden, wobei die eingekerbte Fläche in einer Krümmungsstellung einen kleineren Krümmungsradius aufweist als die mit der Anzeigeschicht verbundene, der eingekerbten Fläche gegenüberliegende Fläche. Mit anderen Worten ist die Trägerschicht bevorzugt mit einer rückseitigen Struktur versehen. Die Struktur kann Einkerbungen und/oder Rippen aufweisen. Die Einkerbungen und/oder Rippen verlaufen vorteilhafterweise in einer zu einer Verschieberichtung senkrecht verlaufenden Richtung entlang der Rückseite der Trägerschicht. Die Verschieberichtung ist hierbei die Richtung, in die die Bildschirmeinrichtung geschoben und gezogen wird, um in die Gebrauchs- bzw. Verstauposition bewegt zu werden. Durch die Einkerbungen und/oder Rippen ergibt sich der Vorteil einer strukturellen Flexibilität oder Biegsamkeit der Trägerschicht, wobei das Material, aus dem die Trägerschicht gebildet ist, grundsätzlich eine Eigensteifigkeit aufweisen kann. Die Eigensteifigkeit der Trägerschicht ermöglicht es vorteilhafterweise, dass die Trägerschicht die gesamte Bildschirmeinrichtung in der Gebrauchsposition vor einem Umkippen oder Wellen bewahrt, ohne dass zusätzliche Stabilisierungsmittel notwendig sind.

Die Verbindung zwischen Trägerschicht und Anzeigeschicht kann beispielsweise durch eine Kleberschicht realisiert sein. Eine Kleberschicht bietet den Vorteil, dass ein Kleber dämpfende Eigenschaften aufweist und eine Scherkraft aufnehmen kann, um zum Beispiel eine Relativbewegung zwischen der Trägerschicht und der Anzeigeschicht zu kompensieren oder aufzunehmen. Die Verbindung zwischen Trägerschicht und Anzeigeschicht kann allerdings auch auf eine beliebige andere, zweckmäßige Art und Weise erfolgen.

Es kann vorgesehen sein, dass die Bildschirmeinrichtung in der Verstauposition mechanisch vorgespannt in einer gebogenen Stellung gehalten ist und in der Gebrauchsposition mechanisch entspannt und dabei gerade oder eben ist. Mit anderen Worten ist die Bildschirmeinrichtung innerhalb des Gehäuses durch eine von außen auf die Bildschirmeinrichtung einwirkende Kraft in einer gebogenen Stellung fixiert. Die von außen wirkende Kraft kann beispielsweise durch die Gehäusewandung und/oder eine Rolle und/oder seitliche Führungsschienen auf die Bildschirmeinrichtung ausgeübt werden. In der Gebrauchsstellung, also in einer teilweise aus dem Gehäuse herausgefahrenen Stellung, wirkt diese Kraft nicht mehr und die Bildschirmeinrichtung kann eine gerade oder ebene Form einnehmen. Hierdurch ergibt sich der Vorteil, dass keine zusätzlichen Bauteile vorgesehen sein müssen, um die Bildschirmeinrichtung bei Verlassen des Gehäuses geradezurichten. Das Geraderichten oder Aufrichten der Bildschirmeinrichtung findet selbsttätig dadurch statt, dass die Bildschirmeinrichtung bei Verlassen des Gehäuses automatisch von der sie in der gebogenen Stellung haltenden Kraft befreit wird. Davon unberührt kann es auch vorgesehen sein, zusätzliche Führungselemente am Gehäuseausgang anzubringen, die das Geraderichten oder Aufrichten der Bildschirmeinrichtung unterstützen.

In weiterer vorteilhafter Ausgestaltung der Erfindung ist es vorgesehen, dass die Bildschirmeinrichtung eine berührungssensitive Sensorschicht aufweist. Mit anderen Worten weist die Anzeigeschicht der Bildschirmeinrichtung eine berührungssensitive Sensorschicht auf, die auf der Anzeigeschicht angeordnet ist. Bei der Bildschirmeinrichtung kann es sich demnach allgemein um einen Touchscreen (Berührungsbildschirm) handeln. Mit anderen Worten handelt es sich bei der Bildschirmeinrichtung vorzugsweise um einen Touchscreen, wobei mittels der berührungssensitiven Sensorschicht, welche ebenfalls flexibel ausgebildet ist, Berührungen an der Bildschirmeinrichtung erfasst und in entsprechende Steuersignale umgesetzt werden können.

Gemäß einer vorteilhaften Weiterbildung weist die Anzeigevorrichtung zumindest ein längenvariables oder in der Länge anpassbares Stabilisierungselement auf. Das Stabilisierungselement ist in einem ersten Endbereich mit der Bildschirmeinrichtung verbunden und in einem gegenüberliegenden zweiten Endbereich um eine Drehachse drehbar gelagert. Das Stabilisierungselement ist dazu ausgelegt, beim Bewegen der Bildschirmeinrichtung zwischen der Verstauposition und der Gebrauchsposition sich in seiner Länge an die jeweilige der Positionen anzupassen. Des Weiteren ist das Stabilisierungselement dazu ausgebildet, die Bildschirmeinrichtung entgegen einer entlang der Drehachse wirkenden Kraft zu stützen. Mit anderen Worten führt ein Bewegen der Bildschirmeinrichtung zwischen der Verstauposition und der Gebrauchsposition dazu, dass das längenvariable Stabilisierungselement automatisch abwechselnd mitausgezogen und wieder eingefahren wird. Dazu ist das Stabilisierungselement bevorzugt mit einem Ende an einem dem Fußbereich der Bildschirmeinrichtung gegenüberliegend angeordneten Stirnbereich der Bildschirmeinrichtung angeordnet, also an der Oberkante der Bildschirmeinrichtung. Bevorzugt ist das längenvariable Stabilisierungselement als ein passives Element ausgebildet. Als passives Element wird es mit dem Bewegen der Bildschirmeinrichtung mitbewegt. Es kann allerdings auch vorgesehen sein, dass das längenvariable Stabilisierungselement als ein aktives Element ausgebildet ist, welches durch einen eigenen Antrieb die Bewegung der Bildschirmeinrichtung aktiv unterstützen kann. Dies kann vorteilhaft sein bei einer besonders großen und/oder schweren Bildschirmeinrichtung. Allgemein ergibt sich durch das Stabilisierungselement der Vorteil, dass die Bildschirmeinrichtung gegen eine auf eine Bildschirmoberfläche wirkende Druckkraft stabilisiert und somit als Touchscreen-Bedienoberfläche genutzt werden kann.

Gemäß einer vorteilhaften Weiterbildung ist das Stabilisierungselement in dem Stirnbereich der Bildschirmeinrichtung in einem senkrecht oder schräg zu der oben beschriebenen Verschieberichtung der Bildschirmeinrichtung verlaufenden Langloch geführt. Bevorzugt kann der erste Endbereich des Stabilisierungselements in dem senkrecht oder schräg zu der Verschieberichtung der Bildschirmeinrichtung verlaufenden Langloch entlang gleiten. Hierdurch ergibt sich der Vorteil, dass die Bildschirmeinrichtung besonders platzsparend in der Verstauposition verstaut werden kann. Um ein zuverlässiges Entlanggleiten des Stabilisierungselements in dem Langloch beim Bewegen der Bildschirmeinrichtung zu gewährleisten und ein Verkanten zu verhindern, muss sichergestellt sein, dass das Stabilisierungselement nicht über eine vorbestimmte Stelle innerhalb des Langlochs hinausgleitet. Dies kann beispielsweise durch einen im Langloch angeordneten mechanischen oder magnetischen Stopper realisiert sein.

Gemäß einer vorteilhaften Weiterbildung weist das Langloch eine Dachform auf. Mit anderen Worten ist das Langloch nicht parallel zu einer Oberkante der Bildschirmeinrichtung angeordnet, sondern umfasst zwei Segmente, die sich in einem Scheitelpunkt treffen. Dabei gleitet das Stabilisierungselement im ersten Endbereich in einem Segment oder Schenkel des dachförmigen Langlochs entlang. Dadurch ergibt sich der Vorteil, dass das genannte Verkanten besonders erfolgreich verhindert wird und auf den genannten Stopper im Langloch verzichtet werden kann.

In einer besonders vorteilhaften Weiterbildung ist das Stabilisierungselement als ein Teleskoparm ausgestaltet. Ein solcher Teleskoparm kann aus zwei oder mehreren Abschnitten bestehen, welche teleskopartig ineinander ein-und auseinander ausgefahren werden können, um eine Längenvariabilität des Stabilisierungselements zu realisieren. Dadurch ergibt sich der Vorteil, dass das Stabilisierungselement besonders platzsparend verstaut werden kann.

Die Erfindung betrifft des Weiteren ein Kraftfahrzeug mit einer Ausführungsform der erfindungsgemäßen Anzeigevorrichtung.

Das erfindungsgemäße Kraftfahrzeug ist bevorzugt als Kraftwagen, insbesondere als Personenkraftwagen oder Lastkraftwagen, oder als Personenbus ausgestaltet.

Im Folgenden sind Ausführungsbeispiele der Erfindung beschrieben. Hierzu zeigt:
- Fig. 1: eine schematische Vorderansicht einer erfindungsgemäßen Anzeigeeinrichtung in einer Gebrauchsposition;
- Fig. 2: eine schematische Rückansicht einer erfindungsgemäßen Anzeigevorrichtung in Gebrauchsposition;
- Fig. 3: eine schematische Seitenansicht einer Bildschirmeinrichtung;
- Fig. 4: eine schematische Seitenansicht einer erfindungsgemäßen Anzeigevorrichtung in einer Verstauposition;
- Fig. 5: eine schematische Seitenansicht einer erfindungsgemäßen Anzeigevorrichtung in einer Gebrauchsposition;
- Fig. 6: eine schematische Rückansicht einer erfindungsgemäßen Anzeigevorrichtung in einer Verstauposition mit eingeklappten und eingefahrenen Stabilisierungselementen; und
- Fig. 7: eine schematische Rückansicht einer erfindungsgemäßen Anzeigevorrichtung in einer Gebrauchsposition mit ausgeklappten und ausgefahrenen Stabilisierungselementen.

In den Figuren bezeichnen gleiche Bezugszeichen jeweils funktionsgleiche Elemente.

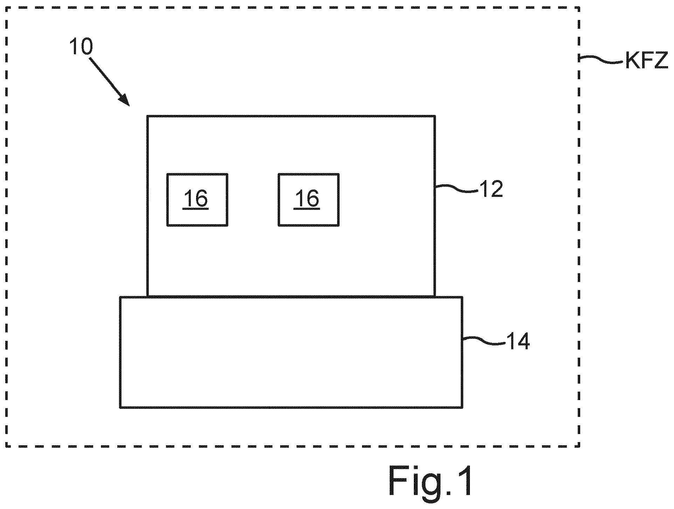

Fig. 1 zeigt eine erfindungsgemäße Anzeigevorrichtung 10 mit einer Bildschirmeinrichtung 12 und einem Gehäuse 14. In der in Fig. 1 gezeigten Vorderansicht der Anzeigevorrichtung 10 sind außerdem pixelbasierte Anzeigeinhalte 16 dargestellt. Die Anzeigevorrichtung 10 kann in einem Kraftfahrzeug KFZ eingebaut sein, beispielsweise in einer Instrumententafel. Das Gehäuse 14 kann in einem Verkleidungsteil versenkt angeordnet sein und die Bildschirmeinrichtung 12 kann durch einen Schlitz des Gehäuses 14 hindurch in einen Innenraum des Kraftfahrzeugs KFZ hinein ausgefahren werden. Während einer Fahrt des Kraftfahrzeugs KFZ kann der ausgefahrene Anteil der Bildschirmeinrichtung 12 in mehreren Stufen variiert werden, um eine bedarfsangepasste und/oder fahrmodusabhängige Größe der sichtbaren Bildschirmoberfläche der Bildschirmeinrichtung 12 einzustellen.

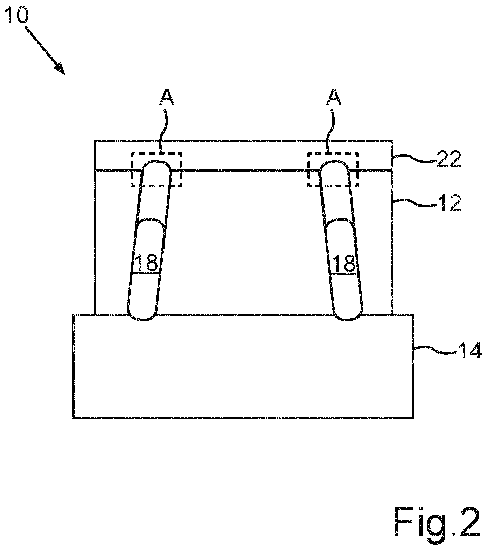

Fig. 2 zeigt eine erfindungsgemäße Anzeigevorrichtung 10 in einer Rückansicht. Zusätzlich zu den im Zusammenhang mit Fig. 1 beschriebenen Komponenten zeigt Fig. 2 zwei Stabilisierungselemente 18, wobei ein jedes der Stabilisierungselemente 18 als ein Teleskoparm ausgebildet ist. Ein jedes der Stabilisierungselemente 18 ist in einem ersten Endbereich A mit einem Stirnbereich 22 der Bildschirmeinrichtung 12 verbunden.

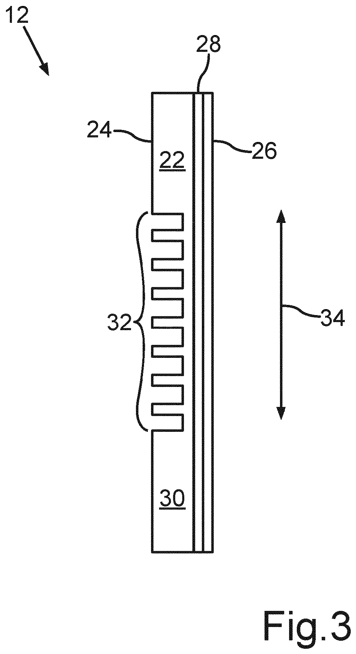

Fig. 3 zeigt eine seitliche Detaildarstellung einer Bildschirmeinrichtung 12. Die Bildschirmeinrichtung 12 weist eine Trägerschicht 24, eine Anzeigeschicht 26 sowie eine die beiden verbindende Verbindungsschicht 28 auf. Die Verbindungsschicht 28 ist in der hier gezeigten Ausführungsform als eine Kleberschicht realisiert. Die Trägerschicht 24 weist einen Stirnbereich 22 und einen Fußbereich 30 auf. Zwischen Stirnbereich 22 und Fußbereich 30 ist ein eingekerbter Bereich 32 angeordnet. Der eingekerbte Bereich 32 weist im hier gezeigten Ausführungsbeispiel Einkerbungen und Rippen auf. Die Einkerbungen und Rippen verlaufen entlang der Rückseite der Trägerschicht 24 schräg oder senkrecht bezüglich einer Verschieberichtung 34. Die Trägerschicht 24 ist also im eingekerbten Bereich 32 biegsam oder flexibel, in Stirnbereich 22 und Fußbereich 30 weist die Trägerschicht 24 hingegen eine hohe Eigensteifigkeit auf.

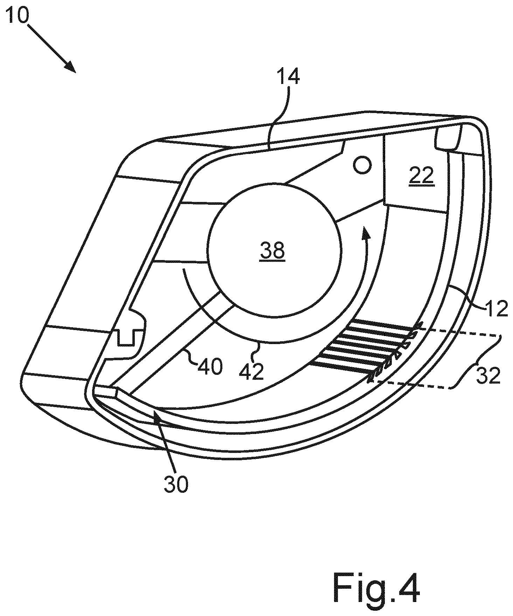

Fig. 4 zeigt eine schematische seitliche Ansicht einer erfindungsgemäßen Anzeigevorrichtung 10, wobei die Bildschirmeinrichtung 12 sich in einer gekrümmten Verstauposition in dem Gehäuse 14 befindet. Unter Bezugnahme auf die im Zusammenhang mit den Fig. 1 bis 3 beschriebenen Komponenten zeigt Fig. 4 die in einem Gehäuse 14 entlang eines Kreisbogens gebogen verstaute Bildschirmeinrichtung 12. **In** der hier gezeigten Ausführungsform ist im Inneren des Gehäuses 14 ein Schwenkmechanismus mit einem Motor 38 und einem Schwenkarm 40 dargestellt. Der Schwenkarm 40 ist mit einem Endbereich drehbar am Fußbereich 30 der Bildschirmeinrichtung 12 angeordnet. Des Weiteren ist der Schwenkarm 40 dazu eingerichtet, von dem Motor 38 ein Drehmoment 42 zu empfangen. Der Schwenkarm 40 kann hierzu beispielsweise entweder starr mit der Welle des Motors 38 verbunden sein und so das Drehmoment 42 empfangen oder Schwenkarm 40 kann über eine Zahnradanordnung mit dem Motor 38 verbunden sein, um das Drehmoment 42 zu empfangen. Die Schwenkachse des Schankarms 40 ist ortsfest bezüglich des Gehäuses 14. In der hier gezeigten Ausführungsform ist die Bildschirmeinrichtung 12 innerhalb des Gehäuses 14 gekrümmt verstaut, wodurch sich eine mechanische Vorspannung in der Bildschirmeinrichtung 12 ergibt.

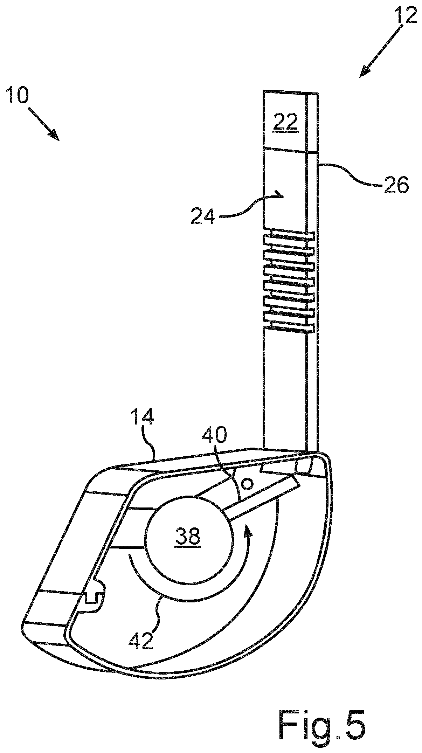

Fig. 5 zeigt unter Bezugnahme auf die im Zusammenhang mit Fig. 1 bis 4 beschriebenen Komponenten eine Ausführungsform der erfindungsgemäßen Anzeigevorrichtung 10, wobei die Bildschirmeinrichtung 12 sich in der hier gezeigten Ausführungsform in einer zumindest teilweise aus dem Gehäuse 14 ausgefahrenen Gebrauchsposition befindet. Durch das Verlassen des Gehäuses 14 fällt die durch das Gehäuse 14 auf die Bildschirmeinrichtung 12 einwirkende Kraft weg, die die Bildschirmeinrichtung 12 innerhalb des Gehäuses 14 mechanisch vorgespannt gehalten hat. **In** der in Fig. 5 gezeigten Gebrauchsposition kann sich die Bildschirmeinrichtung 12 demnach selbsttätig geraderichten.

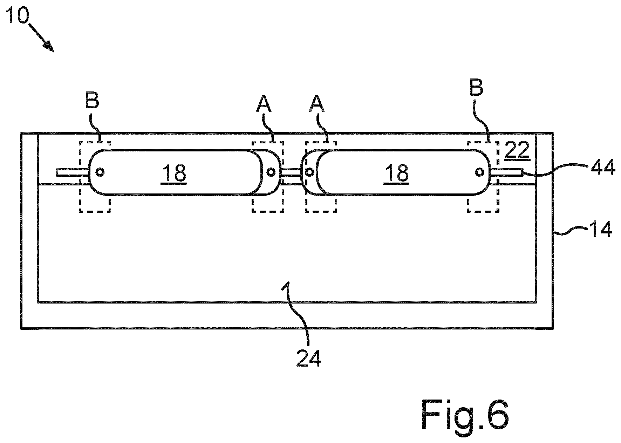

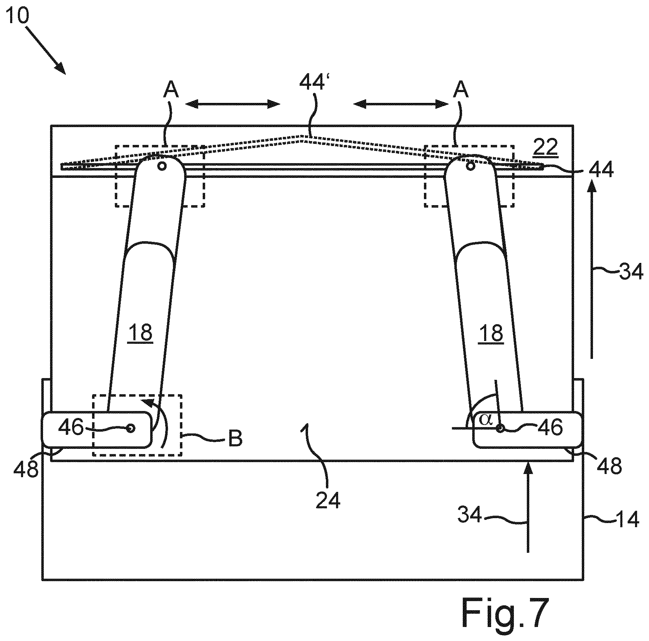

Die Fig. 6 und 7 zeigen Rückansichten der erfindungsgemäßen Anzeigevorrichtung 10. In den in den Fig. 6 und 7 gezeigten Ausführungsformen weist die Anzeigevorrichtung 10 zwei Stabilisierungselemente 18 auf, die jeweils längenvariabel als Teleskoparme ausgebildet sind. In einem jeweiligen ersten Endbereich A ist ein jedes der Stabilisierungselemente 18 in einem in dem Stirnbereich 22 der Bildschirmeinrichtung 12 angeordneten Langloch 44 angeordnet. Die jeweiligen Endbereiche A können beispielsweise mit einem Stift in das Langloch 44 eingelegt sein. Mit einem jeweiligen dem jeweiligen ersten Endbereich A gegenüberliegend angeordneten zweiten Endbereich B sind die Stabilisierungselemente 18 um jeweilige Drehachsenelemente 46 (siehe Fig. 7) drehbar gelagert. Die Drehachsenelemente 46 sind dabei jeweils mit einem Verbindungselement 48 (siehe Fig. 7) gehäusefest mit dem Gehäuse 14 verbunden. Jedes Drehachsenelement 46 kann als Stab oder Stift ausgestaltet sein, um eine parallel zur Drehachse der Stabilisierungselemente 18 wirkende Kraft auf das Gehäuse 14 übertragen zu können. Die Stabilisierungselemente 18 können somit nicht kippen.

Wird nun, wie in Fig. 7 gezeigt, die Bildschirmeinrichtung 12 in Verschieberichtung 34 aus der Verstauposition in die Gebrauchsposition geschoben, so werden die Stabilisierungselemente 18 aus der in Fig. 6 gezeigten Ruhestellung in eine Stabilisierungsstellung ausgezogen. Im Zuge dessen gleiten die Stabilisierungselemente 18 mit ihrem jeweiligen ersten Endbereich A entlang des Langlochs 44 auseinander. In einer endgradigen Gebrauchsposition darf dabei ein Winkel α einen Betrag von 90° nicht überschreiten. Um das Überschreiten dieses Winkelbetrags zu vermeiden, können beispielsweise innerhalb des Langlochs 44 an entsprechenden Positionen nicht gezeigte mechanische und/oder magnetische Stopper angeordnet sein. Gemäß einer möglichen Ausführungsform kann es auch vorgesehen sein, das Langloch 44 dachförmig auszubilden, um ein Verkanten der Stabilisierungselemente 18 im Langloch 44 auch ohne Stopper zu verhindern. In gestrichelter Darstellung ist das beschriebene dachförmige Langloch 44' veranschaulicht.

Die Fig. 6 und 7 zeigen, wie durch die erfindungsgemäßen Stabilisierungselemente 18 konstruktiv eine Totlage oder Selbstblockade verhindert und zugleich eine Leichtgängigkeit gewährleistet wird.

Displays oder Bildschirmeinrichtungen finden immer mehr Einzug in Fahrzeuge und werden zu Design-Elementen. Es sollen möglichst große Displays dargestellt und deren Größe use case abhängig (also bedarfsgerecht, z.B. manuelle oder pilotierte Fahrt) variiert werden können. Weiterhin gibt es den Wunsch, Displays in einer attraktiven Art zu inszenieren. Fest verbaute starre Displays bestimmen maßgeblich die Architektur einer Schalttafel.

Vor allem der Bauraum aber auch Gesetze (JAMA - Japan Automobile Manufacturers Association) beschränken die mögliche Größe und Position im Fahrzeug fest verbauter, starrer Displays.

Vorgeschlagen wird der Einsatz eines flexiblen Displays und einer Kinematik (also einem Schwenkmechanismus), die bauraumoptimiert unterschiedliche Displaygrößen im Fahrzeug darstellen kann.

Im Nichtgebrauchszustand (also in einer Verstauposition) befindet sich das gesamte Display in einer Kassette (also in einem Gehäuse). Die gesamte Einheit (also die Anzeigevorrichtung) kann als geschlossenes System verstanden werden. D.h. die gesamten mechanischen und elektrischen Komponenten funktionieren ohne weitere Zubauteile. Damit kann die Einheit an verschiedenen Stellen des Fahrzeugs verbaut werden (Schalttafel, Sitze etc.) und funktioniert auch außerhalb einer Fahrzeuggeometrie (bei externer Stromversorgung).

Über einen geeigneten Antrieb (also einen Motor) kann das Display stufenlos ausgefahren werden. Dabei wird z.B. durch einen Antrieb das hintere Ende der Bildschirmeinheit (also der Fußbereich der Bildschirmeinrichtung) aus der Kassette herausgeschoben und wieder eingezogen. In jeder Position bietet die Kinematik (also der Schwenkmechanismus) einen stabilen Zustand, der eine Touchbedienung zulässt. Dies wird einerseits über eine flexible Stützstruktur (also über eine Trägerschicht mit einer Eigensteifigkeit und einem eingekerbten Bereich) und zusätzlich über eine sich hinter dem Display befindende Dreh-/Schubführungskinematik erreicht (also über die Anordnung der längenvariablen Stabilisierungselemente in einem Langloch). Dabei darf ein bestimmter Dreh-Winkel (z.B. 80°) nicht überschritten werden, da es sonst zur Selbsthemmung (also zum Verkanten) kommt. Am oberen Ende (also im Stirnbereich) der flexiblen Stützstruktur befindet sich ein ca. 30 mm langer nicht flexibler Anteil, an dem ein Teil der Kinematik befestigt wird. Es ist auch denkbar, dass die Dreh-/Schubführungskinematik einen zusätzlichen, unterstützenden Antrieb besitzt.

Auf der Vorderseite der flexiblen Stützstruktur wird das flexible Display befestigt z.B. verklebt. Der Kleber besitzt dämpfende Eigenschaften und kann gewisse Scherkräfte aufnehmen, um z.B. Relativbewegungen zwischen der Stützstruktur und dem Display zu kompensieren.

Durch die Erfindung ergeben sich mehrere Vorteile. Zum einen ist die Kinematik mechanisch einfach aufgebaut und somit wartungsarm. Zusätzlich nimmt die Anzeigevorrichtung wenig Bauraum in Anspruch. Die Darstellung (Inszenierung) der Anzeigevorrichtung im Kraftfahrzeug ist ansprechend realisiert. Displaygrößen sind bedarfsgerecht einstellbar und eine Touchbedienung ist in jeder Stellung möglich.

Insgesamt zeigen die Beispiele, wie durch die Erfindung eine Anzeigevorrichtung bereitgestellt werden kann, die das Herstellen variabler Bildschirmgrößen ermöglicht, wobei bei jeder eingestellten Bildschirmgröße eine Touchbedienung möglich ist, und die in einem verstauten Zustand möglichst wenig Platz einnimmt.

## Patentansprüche

1. Anzeigevorrichtung (10) zum Anzeigen pixelbasierter Anzeigeinhalte (16), umfassend eine flexible Bildschirmeinrichtung (12) sowie zumindest einen Schwenkmechanismus, wobei der Schwenkmechanismus dazu ausgebildet ist, die Bildschirmeinrichtung (12) in Abhängigkeit von einem Steuersignal zwischen einer Verstauposition, in welcher die Bildschirmeinrichtung (12) entlang eines Kreisbogens gebogen in einem Gehäuse (14) verstaut ist, und einer Gebrauchsposition, in welcher die Bildschirmeinrichtung (12) zumindest teilweise aus dem Gehäuse (14) herausragt, zu bewegen, wobei
der zumindest eine Schwenkmechanismus jeweils einen Motor (38) aufweist,
**dadurch gekennzeichnet, dass**
der zumindest eine Schwenkmechanismus jeweils einen Schwenkarm (40) aufweist, wobei der Schwenkarm (40) mit einem Endbereich drehbar an einem Fußbereich (30) der Bildschirmeinrichtung (12) und mit einem gegenüberliegenden Endbereich um eine Drehachse schwenkbar gelagert ist und dazu ausgebildet ist, von dem Motor (38) ein jeweiliges Drehmoment (42) zu empfangen und hierdurch den Fußbereich (30) entlang des Kreisbogens, dessen Radius einer Länge des Schwenkarms (40) entspricht, zu bewegen und hierdurch die Bildschirmeinrichtung (12) abwechselnd entlang einer Verschieberichtung (34) in die Gebrauchsposition zu schieben und in die Verstauposition zu ziehen.

2. Anzeigevorrichtung (10) nach Anspruch 1, wobei der zumindest eine Schwenkmechanismus im Inneren des Gehäuses (14) angeordnet und dazu ausgelegt ist, die Bildschirmeinrichtung (12) von der Verstauposition stufenlos in Abhängigkeit von dem Steuersignal in zumindest eine Zwischenposition zu schieben und dort zu halten.

3. Anzeigevorrichtung (10) nach einem der vorhergehenden Ansprüche, wobei die Bildschirmeinrichtung (12) eine Trägerschicht (24) und eine Anzeigeschicht (26) aufweist, die miteinander zu einem flexiblen Schichtenverbund verbunden sind, wobei die Trägerschicht (24) an ihrer der Anzeigeschicht (26) abgewandten Fläche mit Einkerbungen versehen und dazu ausgelegt ist, gekrümmt zu werden, wobei die eingekerbte Fläche einen kleineren Krümmungsradius aufweist, als die mit der Anzeigeschicht (26) verbundene Fläche.

4. Anzeigevorrichtung (10) nach einem der vorhergehenden Ansprüche, wobei die Bildschirmeinrichtung (12) in der Verstauposition mechanisch vorgespannt in einer gebogenen Stellung gehalten ist und in der Gebrauchsposition mechanisch entspannt und dadurch gerade ist.

5. Anzeigevorrichtung (10) nach einem der vorhergehenden Ansprüche, wobei die Bildschirmeinrichtung (12) eine berührungssensitive Sensorschicht aufweist.

6. Anzeigevorrichtung (10) nach einem der vorhergehenden Ansprüche, aufweisend zumindest ein längenvariables Stabilisierungselement (18), das in einem ersten Endbereich (A) mit der Bildschirmeinrichtung (12) verbunden und in einem gegenüberliegenden zweiten Endbereich (B) um ein Drehachsenelement (46) drehbar gelagert ist und dazu ausgelegt ist, beim Bewegen der Bildschirmeinrichtung (12) zwischen der Verstauposition und der Gebrauchsposition sich in seiner Länge an die jeweilige der Positionen anzupassen und die Bildschirmeinrichtung (12) entgegen einer parallel zum Drehachsenelement (46) wirkenden Kraft zu stützen.

7. Anzeigevorrichtung (10) nach Anspruch 6, wobei das Stabilisierungselement (18) in einem dem Fußbereich (30) gegenüberliegenden Stirnbereich (22) der Bildschirmeinrichtung (12) angeordneten, senkrecht oder schräg zu der Verschieberichtung (34) der Bildschirmeinrichtung (12) verlaufenden Langloch (44) geführt ist.

8. Anzeigevorrichtung (10) nach Anspruch 7, wobei ein Verlauf des Langlochs (44) eine Dachform aufweist.

9. Anzeigevorrichtung (10) nach einem der Ansprüche 6 bis 8, wobei das Stabilisierungselement (18) als Teleskoparm ausgestaltet ist.

10. Kraftfahrzeug mit einer Anzeigevorrichtung (10) nach einem der Ansprüche 1 bis 9.

## Claims

1. A display device (10) for displaying pixel-based display contents (16), comprising a flexible screen device (12) as well as at least one pivoting mechanism, wherein the pivoting mechanism is formed to move the screen device (12) between a stowed position, in which the screen device (12) is stowed in a housing (14) bent along a circular arc, and a use position, in which the screen device (12) at least partially protrudes from the housing (14), depending on a control signal, wherein the at least one pivoting mechanism respectively comprises a motor (38),
**characterized in that**
the at least one pivoting mechanism respectively comprises a pivoting arm (40), wherein the pivoting arm (40) is mounted with an end area rotatable at a foot area (30) of the screen device (12) and with an opposing end area pivotable around a rotational axis, and is formed to receive a respective torque (42) from the motor (38) and hereby to move the foot area (30) along the circular arc, the radius of which corresponds to a length of the pivoting arm (40), and hereby to alternatingly push the screen device (12) into the use position and to pull it into the stowed position along a displacement direction (34).

2. The display device (10) according to claim 1, wherein the at least one pivoting mechanism is arranged in the interior of the housing (14) and adapted to continuously push the screen device (12) from the stowed position into at least one intermediate position and to maintain it there depending on the control signal.

3. The display device (10) according to any one of the preceding claims, wherein the screen device (12) comprises a carrier layer (24) and a display layer (26), which are connected to each other to a flexible layer composite, wherein the carrier layer (24) is provided with notches on its surface facing away from the display layer (26) and adapted to be curved, wherein the notched surface has a smaller radius of curvature than the surface connected to the display layer (26).

4. The display device (10) according to any one of the preceding claims, wherein the screen device (12) is maintained in a bent position in mechanically prestressed manner in the stowed position and is mechanically relaxed and thereby straight in the use position.

5. The display device (10) according to any one of the preceding claims, wherein the screen device (12) comprises a touch-sensitive sensor layer.

6. The display device (10) according to any one of the preceding claims, comprising at least one stabilization element (18) variable in length, which is connected to the screen device (12) in a first end area (A) and is mounted rotatable around a rotational axis element (46) in an opposing second end area (B) and, upon moving the screen device (12) between the stowed position and the use position, is designed to adapt in its length to the respective one of the positions and to support the screen device (12) against a force acting parallel to the rotational axis element (46).

7. The display device (10) according to claim 6, wherein the stabilization element (18) is guided in an elongated hole (44) arranged in a head area (22) of the screen device (12) opposing the foot area (30), extending perpendicularly or obliquely to the displacement direction (34) of the screen device (12).

8. The display device (10) according to claim 7, wherein a pathway of the elongated hole (44) has a roof shape.

9. The display device (10) according to any one of claims 6 to 8, wherein the stabilization element (18) is configured as a telescopic arm.

10. A motor vehicle with a display device (10) according to any one of claims 1 to 9.

## Revendications

1. Dispositif d'affichage (10) destiné à afficher un contenu d'affichage à base de pixels (16), comprenant un dispositif d'écran souple (12) ainsi qu'au moins un mécanisme pivotant, le mécanisme pivotant étant configuré pour déplacer le dispositif d'écran (12), en fonction d'un signal de commande, entre une position rangée dans laquelle le dispositif d'écran (12) est plié dans un boîtier (14) le long d'un arc de cercle, et une position d'utilisation dans laquelle le dispositif d'écran (12) fait au moins partiellement saillie à partir du boîtier (14), le au moins un mécanisme pivotant comportant respectivement un moteur (38),
**caractérisé en ce que**
le au moins un mécanisme pivotant comporte respectivement un bras pivotant (40), le bras pivotant (40) étant monté au niveau d'une zone d'extrémité de façon à pouvoir tourner sur une zone d'embase (30) du dispositif d'écran (12) et au niveau d'une extrémité opposée de façon à pouvoir pivoter autour d'un axe de rotation, et étant configuré pour recevoir un couple (42) respectif provenant du moteur (38), et ainsi déplacer la zone d'embase (30) le long de l'arc de cercle dont le rayon correspond à une longueur du bras pivotant (40), et ainsi pousser de manière alternée le dispositif d'écran (12) le long d'une direction de déplacement (34) dans la position d'utilisation et tirer le dispositif d'écran (12) dans la position rangée.

2. Dispositif d'affichage (10) selon la revendication 1, dans lequel le au moins un mécanisme pivotant est agencé à l'intérieur du boîtier (14) et est conçu pour pousser le dispositif d'écran (12) de façon continue, en fonction du signal de commande, depuis la position rangée dans au moins une position intermédiaire et le maintenir dans cette position intermédiaire.

3. Dispositif d'affichage (10) selon l'une des revendications précédentes, dans lequel le dispositif d'écran (12) comporte une couche de support (24) et une couche d'affichage (26) qui sont liées l'une à l'autre pour former un assemblage de couches souples, la couche de support (24) étant munie d'entailles sur sa surface opposée à la couche d'affichage (26) et étant conçue pour être incurvée, la surface entaillée ayant un rayon de courbure plus petit que la surface liée à la couche d'affichage (26).

4. Dispositif d'affichage (10) selon l'une des revendications précédentes, dans lequel le dispositif d'écran (12) est maintenu de façon mécaniquement précontrainte dans la position rangée dans une position pliée, et est mécaniquement relâché dans la position d'utilisation et est ainsi droit.

5. Dispositif d'affichage (10) selon l'une des revendications précédentes, dans lequel le dispositif d'écran (12) comporte une couche de capteur tactile.

6. Dispositif d'affichage (10) selon l'une des revendications précédentes, comportant au moins un élément de stabilisation à longueur variable (18), qui est relié au dispositif d'écran (12) dans une première zone d'extrémité (A) et est monté de manière à pouvoir pivoter autour d'un élément d'axe de rotation (46) dans une seconde zone d'extrémité (B) opposée, et est ainsi conçu pour, lors du déplacement du dispositif d'écran (12) entre la position rangée et la position d'utilisation, faire varier sa longueur pour l'adapter à la longueur respective des positions et pour supporter le dispositif d'écran (12) à l'encontre d'une force agissant parallèlement à l'élément d'axe de rotation (46).

7. Dispositif d'affichage (10) selon la revendication 6, dans lequel l'élément de stabilisation (18) est guidé dans un trou oblong (44) s'étendant perpendiculairement ou en oblique par rapport à la direction de déplacement (34) du dispositif d'écran (12), ménagé dans une zone avant (22) du dispositif d'écran (12) opposée à la zone d'embase (30).

8. Dispositif d'affichage (10) selon la revendication 7, dans lequel un profil du trou oblong (44) a une forme de toit.

9. Dispositif d'affichage (10) selon l'une des revendications 6 à 8, dans lequel l'élément de stabilisation (18) est conçu comme un bras télescopique.

10. Véhicule à moteur comportant un dispositif d'affichage (10) selon l'une des revendications 1 à 9.
